# EUROPEAN PATENT APPLICATION

(11) **EP 2 375 872 A2**
(43) Date of publication of application: **12.10.2011**
(21) Application number: 11161799.9
(22) Date of filing: 11.04.2011
(51) Int. Cl.: H05B 37/02

(54) **Outdoor lighting system**

(30) Priority: 12.04.2010 FI 20105371
(71) Applicant: Teclux OY, 00260 Helsinki (FI)
(72) Inventor: Pasterstein, Joel, 00100 Helsinki (FI)
(74) Representative: Lamberg, Samu Petteri

(57) **Abstract**

A method for outdoor lighting with lamps (110). An electricity supply (120) is built for the lamps (110) and, with the lamps, electric current is taken from the electricity supply (120) by a lamp (110). By using the power acquired in form of electric current, control commands sent to the lamp (110) are tracked and outdoor lighting is controlled from the lamp (110) according to the received control commands. Electricity is fed from the electricity supply (120) of the lamp (110) to an additional device (111) independent of the operation of the lamp. Control commands may be supplied through the electricity supply (120).

## Description

### FIELD OF THE INVENTION

The present invention generally relates to an outdoor lighting system. Especially but not exclusively, the invention relates to movement tracking outdoor lighting system.

### STATE OF THE ART

GB2444734A illustrates a street lighting system, wherein targets following a route are lighted such that the presence of objects is detected by one or more sensors, information is passed to other remotely residing control means for switching on at least one streetlight residing ahead along the route. The system aims to save energy. Each lamp is equipped with a unit with communication, identification and control means for controlling switching on of the lamps. Together the control means in the lamps form a decentralised control system for controlling switching on of different lamps.

US2009009089A1 illustrates another street lighting system, which especially aims to improve the night-time perceptiveness of objects by increasing so-called Weber contrast i.e. the lightness of the objects when compared with the lightness of the background. Lighting is implemented by using fixed and vehicle lamps, as well. In the system, the lighting power of decentralised light sources and in some cases, the colour as well, are adjusted such that the Weber contrast would be maximised. Additionally, in the system, passers-by on the road are warned of an emergency vehicle or of a lane being closed by changing the colour of the lighting or by flashing. In the system, fixed lighting is also switched off when there are no vehicles present or nearby.

WO1998028948A1 illustrates a timer for especially controlling street lighting, which timer comprises a receiver for receiving wireless time signals and for decoding received time signals. The only power source of the timer is a public electricity network. The clock of the timer is automatically set after a cut in voltage supply on the basis of received time signals so that there is no need for building a separate voltage supply or redundancy for the timer when the electricity supply of the street-light is switched off.

### SUMMARY OF THE INVENTION

According to the first aspect of the invention, there is provided a method for outdoor lighting by lamps, for which an electricity supply is built; which method is characterised by:
taking electric current from the electricity supply with each one of several lamps, and using received power for:
   monitoring control commands sent to the lamp;
   controlling outdoor lighting of the lamp according to the received control commands;
and which method is additionally characterised by supplying electricity from the electricity supply of the lamp to an additional device independent of the operation of the lamp.

Preferably, the lighting can be switched off when not needed whilst the electricity supply of the lamps can be maintained continuously. Thus even during well-lit periods, other devices, such as electrically controlled traffic signs, signals, signs, advertisements, control devices, weather service devices and traffic lights can be electrified with the electricity supply.

The inventor has noticed that electricity consumption of outdoor lighting systems is especially small during the well-lit times, whilst in the field of the systems, there is plenty of need for various other electric devices independent of the operation of the lighting. Thus the outdoor lighting system is well suited for use as an electricity distribution network for various complementary systems without need to build extra electricity networks.

In the method, control commands may be received from a packet data network. The packet data network may be formed by using the electricity supply as a data transfer connection as part of the packet data network. This way a data transfer connection in a packet form may be formed by the electricity supply of street lighting, for devices existing in the street lighting network, such as street lamps, street lamp control units or one or more additional devices. The existing lamp network may be easily and economically transformed into a one focusing lighting, according to the first aspect of the invention, particularly by installing local circuitries in the lamps at the same time when more energy-efficient bulbs are changed in the lamps.

In the method, control commands being sent to said additional device may be tracked. The control commands sent to the additional device may be guided to the additional device through a local area network connection. Alternatively or additionally, the electricity supply of the additional device may be controlled based on the control commands sent to the additional device.

Control commands sent to the additional device may be transmitted through the electricity supplied to the additional device. The additional device may identify control commands aimed at it and responsively control its operation.

For instance, temporary or permanent traffic lights for changed traffic arrangements and/or electrically changing speed limits may be arranged rapidly with the electricity supply of the street lighting. The operation of this kind of traffic control devices may be automatically adjusted e.g. on the basis of traffic performance, local control, weather information and/or remote control.

In the method, solid state circuit lamps such as light emitting diode (LED) lamps may be used for lighting. In the method, preferably fast-lit lamps are used, which can be switched on so fast that a lighted part of the road accompanying an object moving along the road may be formed.

In the method, dimmed basic lighting may be maintained during dark period. Dimmed basic lighting or basic lighting with lowered power may consume a fraction of the power of the normal lighting. With dimmed basic lighting, faulty lamps may be visually identified and/or low level basic lighting may be maintained for instance for pedestrians.

Switching off or dimming the lighting for a specified period may be implemented gradually, such that during the switching off or dimming the lighting, people within the lamplight have time to react to the switching off or dimming the lighting. For instance bikers and may thus be given time to switch on their lamps or adjust their moving to the changing of lighting.

Said outdoor lighting may be lighting of the road. A road may be a public traffic lane such as a street, a main road, a motorway, a railway, an inland water canal, a foot path, a park lane, a lighted trail, a sawdust track, or a skating route.

In the method, the control commands may be identified by a communication circuitry that is arranged to match with the packet data network being used. Switching the lighting on and off or dimmed may be implemented by a switch circuitry, separated from the communication circuitry, such that if the communication circuitry does not periodically give a pause signal to the switch circuitry, the switch circuitry switches the lighting on.

In the method, movement information may be additionally formed for identifying an object moving on the road, and the movement information may be sent to an external lighting controller through the packet data network. The forming of the movement information may comprise identifying movement and indicating noted movement to the lighting controller. Alternatively or additionally, the forming of the movement information may comprise imaging the road or a part of the road. The method may additionally comprise sending image data through packet data network to an image data processing device.

The movement information may be given to said additional device for use in controlling the operation of the additional device by using the movement information. The additional device may for instance present various advertising messages or warnings depending on the speed of the mover on the road, the distance to the vehicle moving ahead, and the previous operation of the additional device.

The power consumption of the additional device may also be adjusted such that the power consumption of the additional device is reduced when, according to the movement information, operation of the additional device on a normal power is not needed.

Through a lamp-specific lighting control, the lighting may be focused on objects moving on the road or on the environment near them. Thus, the energy normally needed for lighting may be substantially saved when unnecessary lamps need not be continuously switched on.

By using the packet data network, the lighting system of the road may be made modular, easily maintained and scaled. By controlling each lamp separately, the control may be focused on only a part of the lamps that are connected to the common electricity supply, i.e. installing extra wires on the ground or in the air may be avoided.

In the method, a person or a group of persons in proximity to the additional device may be additionally identified, and on the basis of the identification, the operation of the additional device may be controlled.

In the method, the electric power required by the additional device may be given wirelessly, for instance inductively. Because of the wireless power supply, the additional device may be mounted fast in its application without making galvanic contacts between the additional device and the power supply. Thus, the mounting of the additional device for instance in high lamps may be done from the ground level with help of a shaft extension without needing to align corresponding contact surfaces with each other.

In the method, also other existing instrumentation components may be used, such as data transfer modules, control modules, and measuring modules.

According to a second aspect, there is provided an outdoor lighting system for outdoor lighting, which system comprises a plurality of lamps for which an electricity supply is built; which system is characterised by:
each of the plurality of lamps having means for taking electric current from the electricity supply, and means for controlling the lamp by using the received power for:
   monitoring control commands sent to the lamp;
   controlling outdoor lighting of the lamp, according to the received control commands;
and which system is also characterised in that the system comprises means for supplying electricity from said electricity supply to an additional device independent of the operation of the lamp.

Said outdoor lighting system according to the second aspect may be arranged to provide a method according to any embodiment of the first aspect.

The additional device may be an electricity distributing device for distributing electric power to a user device. The electricity distributing device may be remote controlled. The electricity distributing device may comprise a socket outlet. The additional device and the electricity distributing device may be controlled together like a bare additional device in some other embodiments.

The additional device may comprise a traffic device.

Preferably, the additional device has a defined additional device identity. The additional device may identify itself individually or as part of a defined group, with said additional device identity.

In the system, there may be means for providing the additional device identity to a control centre. The control centre may command the power supply of each additional device on the grounds of whether the additional device identity belongs in a group of identities that have been defined to receive power from supply electricity.

The additional device may comprise a usage tracking device that is arranged to save the usage limits of the supply electricity approved to be used by the additional device, and to permit operating of the additional device within the limits. The usage tracking device may be arranged to update the limits according to realised usage.

The usage tracking device may comprise a chip card reader. The usage tracking device may additionally comprise a chip card.

The additional device may have a defined priority level. Each lamp may have a defined priority level. The system comprises means for prioritising the power supply for additional devices and lamps such that the power supply is focused in various additional devices, starting from the additional devices of a higher priority level. The highest priority level may be assigned to devices relevant security-wise, The highest priority level may be assigned to the lamps. A lower priority level may be assigned to a part of the lamps.

The additional devices may comprise authority devices. The authority devices may have a common highest priority level with the lamps.

The system may utilise the priority levels such that power is supplied to all additional devices if there is enough supply electricity; otherwise power supply to devices using supply electricity is brought down, starting from lower priority level devices.

The traffic device may comprise a traffic control device. The traffic control device may be chosen from the following: a traffic light, a remote control gate, an adjustable speed limit sign, an adjustable route sign.

The traffic device may comprise a transporting device. The transporting device may be selected from the following: an automatic ferryboat, a cable elevator, a ski lift, a vehicle elevator, and a pedestrian conveyor.

The traffic device may comprise an identification device. The identification device may be selected from the following: a vehicle identification device, a vehicle license number reader, a device for automatic face recognition, and a traffic control camera.

The additional device may also comprise a traffic controller, configured to receive information of one or more objects moving within the method, and responsively guiding said one or more traffic devices.

There need not be said independent additional device in connection of all lamps in the system. In connection of some lamps, there may be more than one independent additional devices. In connection with the same lamp, there may be two or more similar or different types of additional devices. Data transfer units, electrically controlled traffic signs, signals, signs, advertisements, control devices, weather service devices, traffic lights, and electricity supply junction devices may be used as the additional devices.

The system may comprise means for reporting to the user electricity distribution and deviations in the electricity distribution occurred through an electricity supply junction device or an electricity distribution device.

According to a third aspect of the invention, there is provided a computer program comprising computer program means arranged to cause the computer, when executing the computer program, to implement a method according to an embodiment of the invention.

Various embodiments of the present invention have been illustrated with reference to some aspects of the invention. It should be appreciated that corresponding embodiments may also apply to other aspects and embodiments related to them. The invention will be described, by way of example only, with reference to the accompanying drawings, in which:
- Fig. 1: shows a system according to an embodiment of the invention;
- Fig. 2: shows a block diagram of a lamp according to an embodiment of the invention;
- Fig. 3: shows a block diagram of a control centre, according to an embodiment of the invention;
- Fig. 4: shows a flow diagram of a method at a lamp, according to an embodiment of the invention;
- Fig. 5: shows a method at a control centre, according to an embodiment of the invention; and
- Fig. 6: shows a block diagram of an additional device, according to an embodiment of the invention.

In some embodiments of the invention, packet data communication is used for controlling outdoor lighting over the supply electricity of the outdoor lighting, for instance such that a light wave proceeds with a person or a vehicle moving on the road. Then the lamps in the light wave light up the road and repeated lighting reducing commands are sent to the other lamps using the packet data communication for saving energy and extending the life of the lamps. By adjusting the operation of the lamps by means of lighting reducing commands, the lighting may be arranged to be switched on by itself during malfunction. Thus, safety during malfunction may be improved. Various independent additional devices may be used with the electricity supply of the outdoor lighting system, irrespective of whether the lighting is in use or not. Thus, with the existing infrastructure, one may both save energy in outdoor lighting and provide electricity distribution capacity to various additional devices. Particularly when mercury vapour lamps or sodium lamps are changed for LED lamps, the electricity demand per lamp may substantially diminish, and released electric power may be utilised to other purposes during the lighting period, as well. Additionally, by adjusting the lighting focused to the area, which the movers on the road need, i.e. using so-called moving light waves, the power demand of the lighting may be further reduced and more capacity released for other electricity distribution.

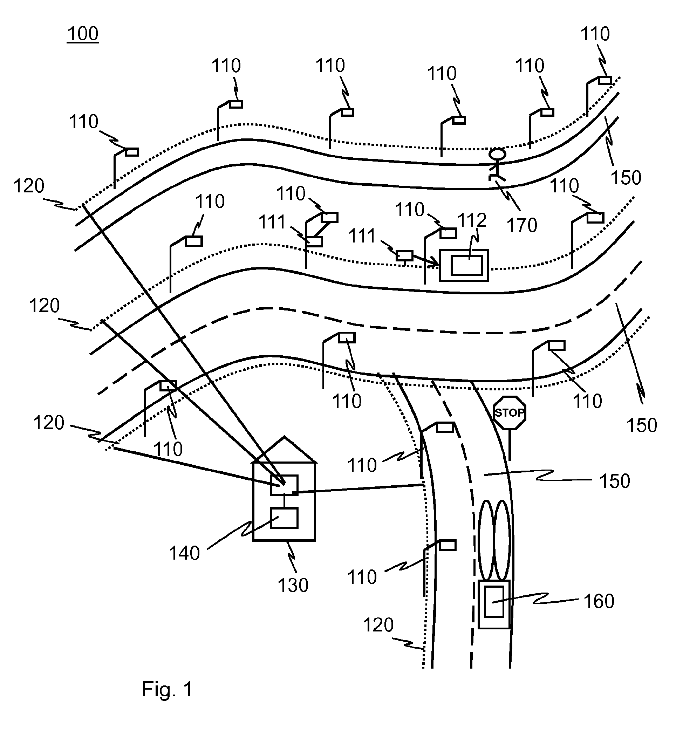

Fig. 1 presents a system 100 according to an embodiment of the invention. The system comprises a group of outdoor lamps 110, an electricity supply 120 for the lamps 110, additional devices 111 independent of the operation of the lamps, user devices 112, a supply centre 130 for supplying operating electricity through the electricity supply 120 to the lamps 110, and a control centre 140 in a operational connection with the supply centre. The system may also comprise traffic devices in a communicational connection with the control centre 140. In Fig. 1, there are also drawn roads 150 (containing a walkway and two streets), a vehicle 160 moving on the road, and a pedestrian 170 representing pedestrian and bicycle traffic.

The system according to Fig. 1 may be formed for instance from a commonly used street lighting system such that the lamps are changed for lamps 110 according to an embodiment of the invention, and the control centre 140 communicating with lamps 110 through operating electricity is mounted in the supply centre. Preferably, according to some embodiments of the invention, the existing electricity supply of the lamps may be used for supplying lighting energy and intelligent controlling of the lighting. Thus for instance digging new cables in the street network may be avoided.

The lamps 110 are situated in ways typical for outdoor lamps, for instance in lighting columns, on tunnel ceilings, or hanging above the roads.

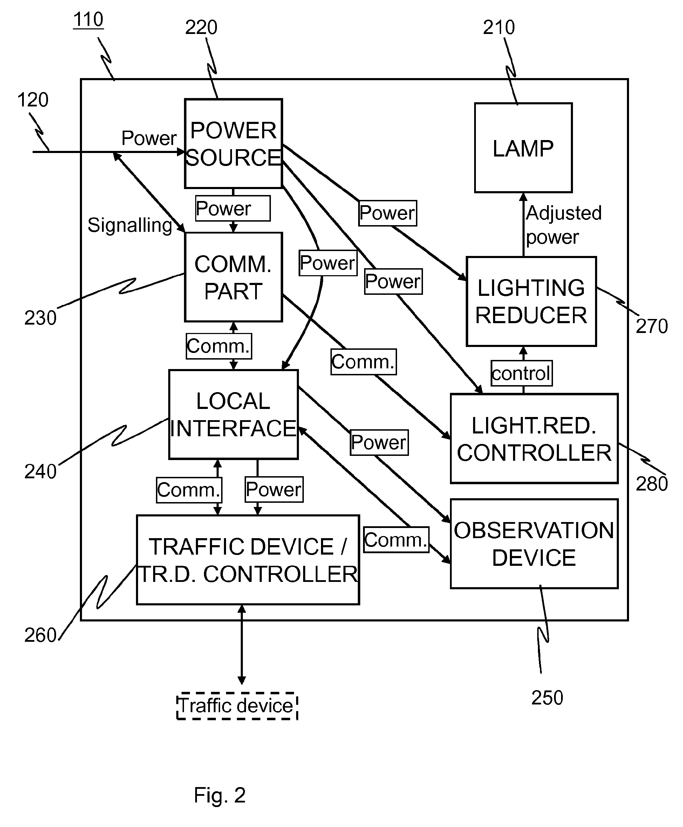

Additional devices 111 may be mounted for instance in the case of the lamp, fixed on the lighting column or inside the column, or mounted onto a target independent of the lamp and the lamp column such as a wall of the building, and connected to the electricity supply of the lamp, or to the lamp 110 (for instance onto the local interface 240 presented in Fig. 2).

The system may comprise means for restricting providing of electricity supply 120 to the additional devices 111 for securing the sufficiency of electricity supply 120 such that power supply from the electricity supply 120 is prevented from the additional devices 111, when necessary, starting from lower priority level additional devices. Thus overloading of electricity supply 120 may be avoided whilst a number of various additional devices 111 are allowed to be connected to the system.

An additional device 111 may be for instance an electricity distributing device, remote controlled from the control centre 140, to which distributing device various user devices 112 may be attached. Such an electricity distributing device may comprise a customary wall socket, to which a user device 112 may be connected. Alternatively, the wall socket may differ from the norm in which case the cord itself functions as a simple key that enables connecting the user device to the electricity distributing device.

Fig. 2 presents a block diagram of a lamp 110 according to an embodiment of the invention. The lamp 110 comprises a bulb 210, a power source 220 working on supply electricity for producing suitable voltage or voltages for the electronics and possibly for the lamp 210 as well, a communication part 230 for packet data communication with the control centre 140, a local interface 240 for attaching additional devices, an optionally provided observation device 250 attached to the local interface 240, and an optionally provided traffic device or traffic device controller 260. The lamp 110 may also comprise a lighting reducer 270 and a lighting reducer controller 280 connected with the communication part 230.

The parts attached to the lamp, particularly the observation device 250, the traffic device controller 260, and the lighting reducer controller 280 may have routing addresses of their own, for controlling these parts from the control centre.

The bulb 210 may be for instance a light source formed of one or more LED bulbs (light emitting diode), a compact fluorescence light bulb, or some other light source, which is lit so fast that the lighting may be controlled with a way according to an embodiment of the invention.

The power source 220 may be for instance a power source suitable for supply electricity, manufactured for industrial use, which power source produces needed voltages. The needed voltages may comprise for instance voltages 3V DC (Direct Current), 5V DC, and/or 12 V DC.

The communication part 230 may comprise for instance a packet data communication unit working via an electricity network, manufactured for industrial use. The communication part may be for instance arranged to communicate with an Internet protocol (IP) version 4 or 6. The communication part may have a predefined Media Access Control (MAC) address, by using which a fixed or dynamically given routing address i.e. IP address may be indicated to the communication part for routing data packets to said communication part.

The local interface 240 may follow an existing standardised bus solution or a bus solution of some party's own such as SA S50.02, ControlNet, P-Net, CAN, Profibus, ASI, SDS or LON route. Preferably, the lamp provides an easy connectivity for modularly implemented parts (e.g. bulb, power source, communication part, observation device, and/or traffic device controller). The local interface may for instance provide communication connections between the (other) parts connected to the local interface and the communication part, and/or power supply to various parts of the lamp 110.

Preferably, the lamp may be mounted otherwise ready and connected to its use in place of the old lamp such that the lamp has various parts used in it in position. Mounting and maintenance of the lamp may also be implemented such that the desired part is mounted in the lamp instead of a faulty part or in a free mounting slot as an added new part.

The observation device 250 may comprise for instance one or more of the following: a camera, a video camera, a radar, a device for presence recognition (such as a motion detector), a weight sensor, a metal detector, a thermal sensor and a detector for signals sent by a wireless device such as a detector for radio signals sent by a mobile phone or a detector for signals sent or reflected by a radio frequency identifier (RFID) transponder. The observation device may be mounted in the lamp or, from the observation device to the lamp merely the controller may be mounted on the observation device for saving space or achieving a technically or economically better location of the observation device.

The system may comprise a traffic control device. The traffic control device may be chosen from the following: a traffic light, a remote control gate, an adjustable speed limit sign, an adjustable route sign.

The traffic device may comprise a transporting device. The transporting device may be selected from the following: an automatic ferryboat, a cable elevator, a ski lift, a vehicle elevator, and a pedestrian conveyor.

The traffic device may comprise an identification device. The identification device may be selected from the following: a vehicle identification device, a vehicle license number reader, a device for automatic face recognition, and a traffic control camera.

The lighting reducer may comprise for instance a digital or an analogue delay circuit, which is configured to keep the power supplied to the lamp 210 on a reduced level or switched off for a specified period, responsive to the command given by the lighting reducer controller 280.

The lighting reducer controller 280 may be controllable from the control centre 140 through the communication part 230.

The various parts of the lamp are preferably mounted in a common case. Alternatively one or more parts are mounted separately.

The outdoor lamp in Fig. 2 shows a lamp according to an embodiment of the invention, and a possibility to attach some additional devices to this kind of a lamp. It should be appreciated that within the scope of the invention other kinds of connections may be made, as well. For instance, electricity supply junction devices, such as electricity distributing devices, may be attached to the electricity supply of the outdoor lighting system. Preferably, the junction devices are equipped with a logic and a communication circuit, which is arranged to communicated for instance via said packet data network. This arrangement is illustrated by the following example that can naturally be applied with various other embodiments of the invention. When necessary, electricity may be distributed to electrically operated vehicles via the outdoor lighting network. This is particularly preferable because the operation distances of electronically operated vehicles are often short, and especially during cold weather, a need to charge batteries such that the vehicle can be transferred, for instance, to a charging station to be charged with a power current charger, may suddenly arise. In an embodiment of the invention, a maximum electric current of 2, 8, or 10 amperes is given for charging from the outdoor lighting system. Additionally, if it is supervised that the power supplying ability of the system is not exceeded, charging with the outdoor lighting system does not necessarily immediately succeed. The supervision may prevent starting a new charging if it were to exceed the power supplying ability of the system. The junction device may be specified to provide electricity only for a limited time or for a limited amount of energy. The junction device may be specified to be chargeable such that by paying a given fee, the junction device provides a given amount of energy in a given period. Thus charging with the outdoor charging system may be arranged to be such a possibility that can be used in emergency but will not be overloaded as a normal charging device of electronic cars.

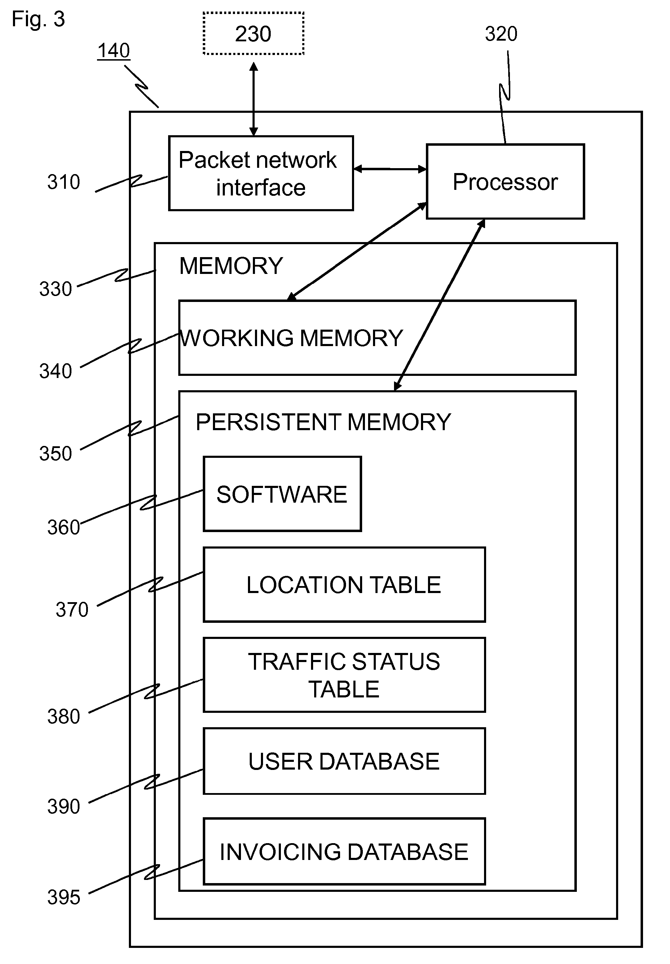

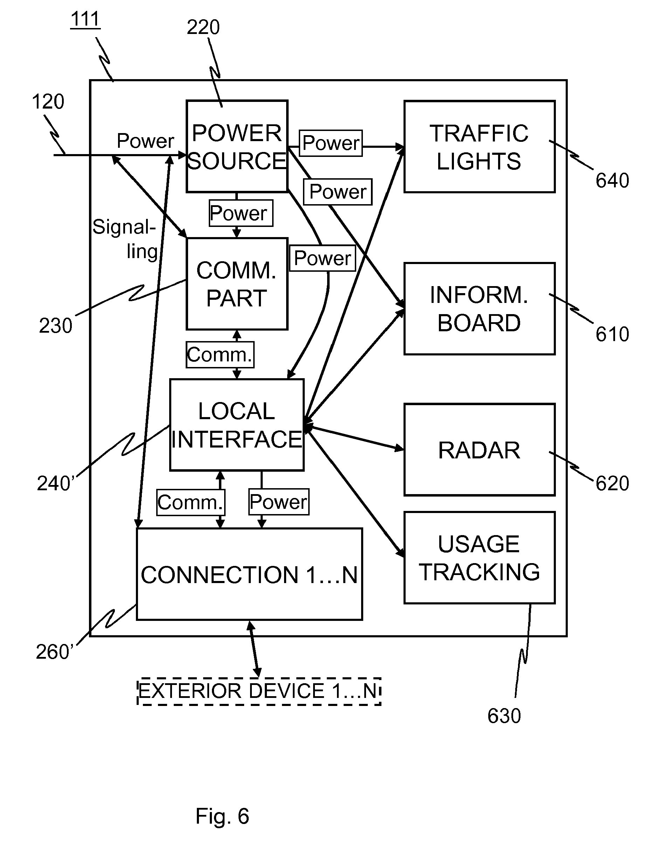

Fig. 3 presents a block diagram of the control centre 140 according to an embodiment of the invention. The control centre 140 may be implemented by using a conventional server computer or automation system such that a packet data network interface 310 is situated in the control centre with the communication part 230 for communicating. The control centre also comprises a processor 320, a memory 330 comprising a work memory 340 and a persistent memory 350 and a computer software 360 stored in the persistent memory, and a location table or a database 370, and a movement status table 380. The operation of the control centre 140 is controlled by the processor 320 on the basis of the computer program 360 in a way which will be described through an example in Fig. 6 presented later on. The location table 370 comprises, for instance, a location identifier for each lamp, and device and/or routing addresses of the parts that are attached to the lamp and accessed through the packet network. The movement status table 380 comprises movement information or prognosis of the noted and expected movers along the roads controlled by the control centre, for controlling the light wave following the movers. The control centre 140 may have a user database 390 that contains information on various users such as one or more of the following: the name of the user, authentication data, connection address, and user preferences. The control centre 140 may have an invoicing database with information on the invoicing of various users, such as one or more of the following: the price of the distributed energy, information on the amount of the energy used, limitations in distributing energy, the priority level of the user, indication of the minimum energy amount needed by the user, the account balance, the account credit limit, and notification settings, on the basis of which notifications of various invoicing-related events may be sent to the user.

According to an embodiment of the invention, fluctuation in the power need and/or electricity need of the electricity network may be levelled by controlling the power supply of lamps 110 and/or additional devices 111. When there is plenty of electricity power available it may be channelled more to lighting with lamps 110, and/or for instance, for charging electronic cars through additional devices 111. Whereas when there is lack of electricity power, for instance when after a popular TV program a mass of people turns an electric sauna or an electric kettle on, the electric power distributed through the electricity supply 120 of the lighting may be reduced. According to this embodiment, an electricity network or electricity supply built for outdoor lighting may be utilised for distributing electricity to other devices than lamps and simultaneously provide adjusting capacity to be provided for electricity distribution.

In the afore mentioned embodiment, the power supply for additional devices 111 may be cut off. With some additional devices 111, cutting off power supply is practically insignificant as long as they receive the needed total amount of energy during the available period. For instance, not necessarily a lot of energy is needed for charging an electronic car after a short work trip. Then again after a longer driving trip or if the charging time is short, the charging should not be interrupted. User profiles may be maintained for this purpose, in which user profiles permanent or temporary rules may be stored, according to which the electricity supply may be interrupted primarily when permitted in the user profile. Such permits for interruptions may be perceived for instance as reduced energy price or as compensations for interruptions carried out.

The users taking power from the electricity supply 120 to an additional device 111 or with an additional device 111 for a device of their own, such as an electronic car, may be informed about the interruptions in power supply. The user profile may contain address information for this purpose for sending e-mail, text messages, multi-media messages, or instant messages.

Usage reports, in which there are indicated how much and/or when energy is distributed via the electricity supply to the additional device 111 or with the additional device 111 for the user, may be given to the users. The usage reports may be sent to the user. The usage reports may be provided for the users to be retrieved for instance via a web interface or by letting the user order reports by sending a chargeable or free message, which identifies the user, and responsive to which message the usage report is sent to the user.

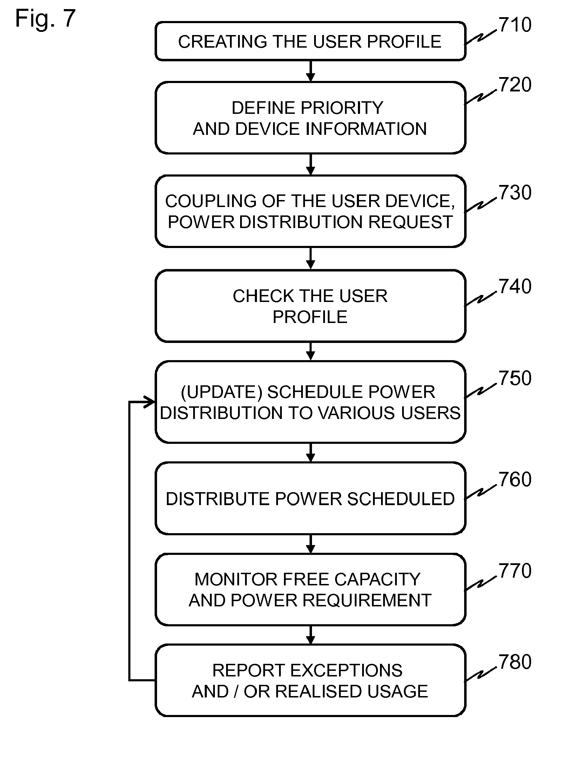

Further in the description, some earlier presented processes, which are provided in various embodiments of the invention, are illustrated with reference to Fig. 7.

The control centre 140 may be coupled with other control centres or to the core network for instance by using an IP channel, such that each control centre may convey and receive movement information concerning the surrounding control centres. An aim may be to be able to provide on the roads light waves following the movers seamlessly regardless of the range of various control centres. For this purpose, movement information may be common between various control centres such that a mover moving from the area of one centre to the area of another centre is conveyed for the attention of the new centre in time. When the mover moves from an area controlled by one control centre to an area controlled by another control centre, the receiving control centre lights up the lighting of the road in question such that there is no difference in the implementation of the lighting with regard to moving in the range of only one control centre.

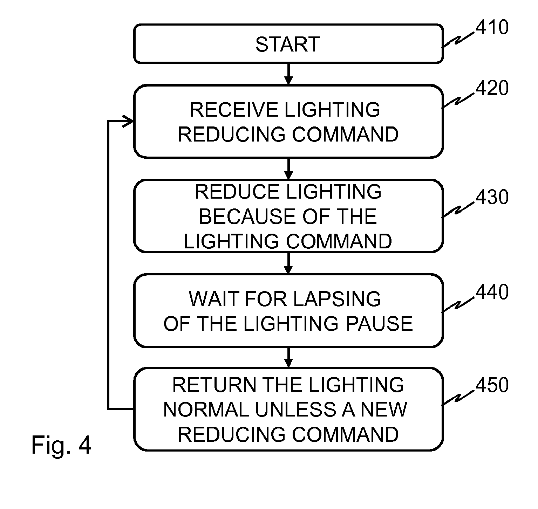

Fig. 4 presents a flow diagram of a method at a lamp according to an embodiment of the invention. The method begins from step 410 in which the lamp gets the operating voltage through the electricity supply 120 and the lamp 210 is glowing. The communication part 230 receives 420 a reducing command for lighting. The reducing command may include an indication of the desired amount of reduction. Alternatively, the reducing command may be configured to reduce the lighting by certain amount, e.g. 20, 50 or 80 per cent. The reducing command may also indicate the duration of the reducing of the lighting. The controller of the lighting reducer may reduce 430 the lighting responsive to the reducing command by giving a corresponding reducing command to the lighting reducer 270. The lighting reducer will start following 440 the lapsing of the lighting pause. Even if the lighting reducer controller or the communication part was damaged meanwhile, the lighting reducer may restore the lighting independently. That is to say, when the defined lighting pause has lapsed, the lighting reducer restores the lighting on its normal level 450, unless a new reducing command has been given from the lighting reducer controller before the lighting pause caused by the reducing command ends. This process describes switching lighting on and off or dimmed.

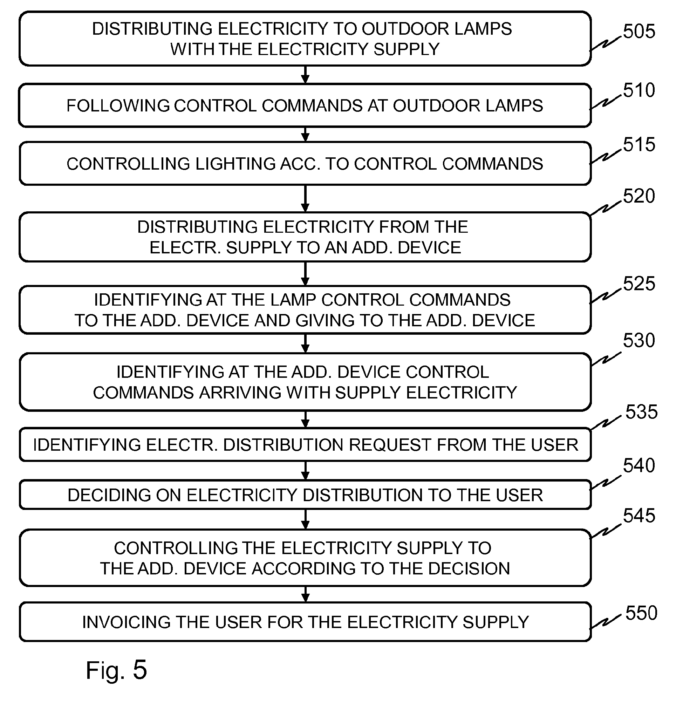

Fig. 5 presents a flow diagram of a method according to an embodiment of the invention. In the method, electricity is distributed 505 to outdoor lamps by electricity supply. Control commands addressed to the outdoor lamps are monitored 510 by the lamps themselves. The lighting is controlled 515 according to the control commands for instance to the desired power level. At the same time, electricity is distributed 520 from the electricity supply to the additional devices. Control commands to the additional device may be identified 525 and conveyed to the additional device at the lamp. In this case, if the control commands are conveyed modulated in the supply electricity, the additional device may for instance have a conventional local area network or USB (universal serial bus) connection. Alternatively or additionally, additional device-related control commands, which arrive with the supply electricity, may be identified 530 with the additional device. Control commands may be used with the additional device for controlling the operation of the additional device regardless of whether the control commands are received from the supply electricity, the lamp, or by some other route. In the method, an electricity distribution request may be identified 535 as well. The additional device, or for instance the control centre outside the additional device, may decide 540 on distributing electricity to the user. If the decision is made outside the additional device, at least the decision and optionally for instance the said electricity distribution request are communicated between the additional device and the body making the decision. The electricity supply of the additional device or the operation of the additional device are controlled 545 according to the decision. The user may be invoiced 550 for the electricity distribution before, during and/or after the electricity distribution.

Fig. 6 presents a block diagram of an additional device 111, according to an embodiment of the invention. A power source 220 and a communication part 230 corresponding Fig. 2 are drawn in the additional device of Fig. 6, for using communication via the electricity supply, and for arranging the voltage received from the electricity supply to the electronics as fitting one or more different direct-current voltage. In this embodiment, the additional device 111 additionally comprises a local interface 240' like the one presented in Fig. 2. The local interface 240' in Fig. 6 may also contain processing means arranged to control operation of the devices coupled or to be coupled to the local interface 240' on the basis of the messages received from the communication part. Additionally, the additional device 111 comprises a group of various modules that are preferably coupled on the local interface 240'. Devices with low power requirement such as a radar 620 or a usage tracking device 630 may operate with voltages given by the power source. Devices requiring more power, such as fairly large information boards 640 meant to be used outside, and traffic lights 640, are coupled to the voltage of the electricity supply 120 via the power source 220, as well.

The power source 220 may comprise a wireless power receiving body (not in Fig.) the power receiving body may be based on, for instance, electromagnetic induction, i.e. electric current inducing from a changing magnetic field is received by a coil. Such a power transfer may be preferable for instance in that the additional device may be simply mounted by making a mechanical mounting onto the corresponding power providing device, in which case galvanic contact is not needed. Thus there is no need to clean the contacts, open the protection lid or plug of the contacts, nor focus the additional device especially closely. The mounting may be carried out for instance from the ground from a car or by foot relatively high up by using e.g. a telescopic shaft, with which the additional device is lifted up to its mounting point. The additional device lifted up to the mounting point may be fastened for instance by tightening a gripping body, such as a U shape spring, gripping the mounting point via the shaft, or by attaching the additional device with a permanent magnet. Additional devices mounted high up are typically fairly well protected from mischief by their location. Additionally, operation of surveillance cameras, radars and radio communication devices may benefit from the location, which is clearly above ground, for instance in the height of 4-10 metres.

The additional device 111 may comprise a fixed or interchangeable memory (not presented in Fig. 6). The memory may have an additional device identity, which defines an individual or group identity (regarding a certain group of additional devices) regarding the additional device. The additional device identity may be used for instance at the control centre for deciding whether the additional device may take power from the electricity supply of the lamp.

The usage tracking device 630 may be provided for controlling usage according to predefined regulations. The usage tracking device 630 may comprise for instance a chip card reader for using a chip card, which may have said predefined regulations stored in it. The usage tracking device may be defined to track the usage of the supply electricity, and/or the period when the usage is permitted, and to control that the usage does not exceed given limits. Limits may be adjusted during the usage such that if the using of the additional device is suddenly interrupted, the permitted usage is however limited to the amount set by the predefined regulations.

The additional device may have a predefined priority level. Indication of the priority level may be stored in the additional device, or the indication may be stored in a priority level table maintained by an external element, such as the control centre, such that the priority level is accessible on the basis of the additional device identity. The priority level may be stored additionally or optionally in said chip card.

Authority devices such as speed control cameras, radars, controllable traffic signs etc. may operate as additional devices 111. Some or all authority device may have a common highest priority level with the lamps, priority level next from the lamp, or priority level higher than that of the lamps.

The operation of the additional device may be controlled on the basis of persons or animals near the additional device. The additional device may be switched on or to operate on a certain way when people or animals come near it. The additional device may adjust its operation on the basis of individual or group-specific features of people near it. For instance in case of notice board i.e. information board, messages chosen by criteria defined by the person him/herself or by the group represented by the user, may be presented to the person. As an example there is mentioned that with face recognition, persons looking like men may be identified and car or motor cycle advertisements may be shown to them. In some embodiments, identities of mobile communications or remote readable identifiers may be attached to the system, as well criteria related to them, on the basis of which the operation of the additional device may be adjusted.

Preferably, the operation of the additional device is automatic.

Fig. 7 presents a block diagram for illustrating processes according to some embodiments of the invention. First, a user profile is created and defined for a new user. In this context, typically the user name and at least one piece of contact information are stored. In a preferred embodiment, the user profile is defined such that the user sends a text message to the service provider, who acquires the user name, phone number and usage charge from the teleoperator of the sender of the text message. This mechanism is particularly easily introduced, when an actual service contract needs not be made beforehand but a mere message to a chargeable number suffices for introducing the service. Alternatively, the user may call a chargeable number or form a user account for instance in the Internet, in a way known in the field of technology. Instructions for defining the user account may be provided from a guideline in connection with the additional device 111, or they may for instance be sent wirelessly as a short distance message. In an embodiment, there is a wireless LAN in the additional device allowing forming of a free connection to the service form of the service provider, with which form the user profile and invoicing information are updated. In this case, the invoicing may be arranged e.g. as direct debit by using a web bank or via a credit card.

In connection with creating the user profile, in step 720, the service level or priority desired by the user, and/or the device information on the user device 112, illustrating the device to which power is wished to be distributed from the electricity supply 120 with the additional device 111, may be defined. Priority defining may be implemented for instance by providing the user with more than one chargeable phone number, associating each of them with a separate priority, and noting the priority according to the chargeable phone number chosen by the user. The user device 112 information may define for instance a minimum power, which is useful, and a maximum energy, which may be needed from the electricity supply 120. Information on how much the power supply from the electricity supply 120 is permitted to be cut may be stored in the information of the user device 112, as well. This information in the additional device information may be useful because the same user may have various user devices, which have features and power needs deviating from each other.

The normal operation may begin when the user profile has been created and necessary setting have been formed. In step 730, the user couples the user device 112 in the system 100. The user, or in some embodiments the user device 112 itself (e.g. with a signalling sent over a bond wire) may require distributing power from the supply electricity to the user device 112.

In the system, needs and invoicing information according to the user profile are checked 740 (for instance in the control centre 140 or in another server) for scheduling power distribution. Power distribution is scheduled 750 between various users on the basis of user profiles and the user devices 112 coupled to the system, perceiving the needs of street lighting as well, or the earlier formed scheduling is updated. In this connection, the capacity of each electricity distribution centre and power requirement of the user devices 112 in the area of the centres and possibly the state of loading and availability of electricity in the public electricity network are perceived.

Power is distributed 760 scheduled with the supply electricity 120 to various users and/or lighting, according to need and possibilities, and the realised power distribution is recorded in the user profile of each user receiving power. Note that the user profile may naturally be divided in different parts such as user information and invoicing information but in this description, the user profile is understood to cover invoicing information, as well.

Free capacity available in the electricity network and the power need may be observed 770 for instance by periodically receiving status updates from the main grid company or companies. This information may be utilised in updating scheduling such that in the main grid level, variation in electricity availability and consumption are optimised.

In step 780, exceptions in power distribution requested by customers and/or realised use are reported (e.g. according to the user profile or general settings) to the users.

The foregoing description has provided non-limiting examples of some embodiments of the invention. It is clear to a person skilled in the art that the invention is not restricted to details presented above, but that it can be implemented using equivalent means. For instance, it should be appreciated that in the presented methods, the order of individual method steps may be changed and that some steps may be repeated several times or completely left out. It should be appreciated, as well, that in this document the terms comprise and include are open-ended expressions and not intended to restricting.

Furthermore, some of the features of the above-disclosed embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method for outdoor lighting with lamps (110), for which an electricity supply (120) is built;
**characterized by**:
taking electric current from the electricity supply (505) with each one of several lamps, and using the received power for:
monitoring (510) control commands sent to the lamp;
controlling (515) outdoor lighting of the lamp according to the received control commands;
and which method is additionally **characterised by** supplying (520) electricity from the electricity supply of the lamp to an additional device (111) independent of the operation of the lamp.

2. A method according to claim 1, **characterised in that** the control commands are supplied in a packet data network that is implemented by using electricity supply (120) as a data transfer connection.

3. A method according to claim 1 or 2, **characterised in that** the electricity supply of the additional device is controlled (545) on the basis of control commands.

4. A method according to any one of the previous claims, **characterised in that** lighting with the lamp is done by solid state circuit lamps such as LED lamps.

5. A method according to any one of the previous claims, **characterised in that** the operation of the additional device is controlled on the basis of movement information of the persons residing in proximity to the additional device.

6. A method according to any one of the previous claims, **characterised in that** the power consumption of the additional device is reduced when, based on the movement information, operation of the additional device on a normal power is not needed.

7. An outdoor lighting system (100) for outdoor lighting, which system (100) comprises a plurality of lamps (110), for which an electricity supply (120) has been built; **characterised in that**:
each of a plurality of lamps having means (220) for taking electric current from the electricity supply, and means (230, 270, 280) for controlling the lamp by using the received power for:
monitoring control commands sent to the lamp (110);
controlling outdoor lighting of the lamp (110), according to the received control commands;
and which system (100) is also **characterised in that** the system (100) comprises means for supplying electricity from said electricity supply to an additional device (111) independent of the operation of the lamp.

8. A device according to claim 7, **characterised in that** the system (100) comprises a packet data network for providing control commands, which packet data network is arranged to use the electricity supply (120) as a data transfer connection.

9. A system according to claim 7 or 8, **characterised in that** the system (100) comprises means for distributing electricity to a user with said additional device (111), arranged to regulate the power, energy, and/or the timing of electricity distribution of the electricity distributed to the user.

10. A system according to claim 9, **characterised in that** the additional device (111) comprises a usage tracking device arranged to monitor and control operation of the additional device (111) for adjusting the electricity distribution.

11. A system to any claim 7 - 10, **characterised in that** the additional device (111) is an electricity distributing device for distributing electric power to a user device (112).

12. A system according to claim 11, **characterised in that** the additional device (111) is remote controlled.

13. A system according to any claim 7 - 12, **characterised in that** the system comprises means for reporting electricity distribution and deviation in electricity distribution, which has happened through an electricity supply junction device or an electricity distribution device, to the user.

14. A computer program comprising software means arranged to cause the computer, whilst performing the computer program, implement a method according to any one of the claims 1 - 6.
